# EUROPEAN PATENT APPLICATION

(11) **EP 1 873 633 A2**
(43) Date of publication of application: **02.01.2008**
(21) Application number: 07012540.6
(22) Date of filing: 26.06.2007
(51) Int. Cl.: G06F 9/44

(54) **Automation HMI visualization utilizing GUI function blocks**

(30) Priority: 29.06.2006 US 427436
(71) Applicant: Rockwell Automation Technologies, Inc., Mayfield Heights, OH 44124 (US)
(72) Inventor: Hummer-Koppendorfer, Oliver, 1060 Wien (AT); Auinger, Franz Johann, Dr., 4303 St. Pantaleon (AT); Zoitl, Alois, 4150 Rohrbach (AT); Strasser, Thomas Ignaz, 2343 St. Leonhard/Forst (AT); Christensen, James H., Cleveland Heights. OH 44121 (US); Hall, Kenwood H., Hudson, OH 44236 (US)
(74) Representative: Englaender, Klaus

(57) **Abstract**

Web components are leveraged to provide a dynamic distributed automation control system HMI based on GUI function block networks. The Web components run within a Web browser, allowing for dynamic control and/or monitoring of automation control system devices from remote locations - without requiring additional software and/or computing resources to be installed. In one instance, a generic Web component is utilized to create specialized Web components utilizing parameters supplied by hypertext markup language (HTML) pages.

## Description

### RELATED APPLICATION

This application is related to co-pending and co-assigned U.S. application entitled "HMI FRAMEWORK FOR EXTENSIBLE AUTOMATION SYSTEM ENGINEERING PLATFORMS," client reference 06AB124, filed on June 29, 2006 and assigned Serial No. 11/427,423 and is incorporated herein by reference.

### BACKGROUND

Human/machine interfaces (HMI_{S}) or simply user interfaces are important to the successful operation and maintenance of industrial automation equipment. User interfaces provide the essential communication link between operators and machines. This link allows operators to, among other things, setup devices, monitor device status during operation, as well as analyze device health. Without such user interfaces, high level industrial automation would be difficult if not impossible to achieve, especially for distributed automation systems with diverse locations.

Over the years, user interfaces have gone through several changes. At first, user interfaces were simply dumb terminals, which merely displayed text messages to end-users indicative of some process performed by a server or processor associated with an automated device. For instance, a failed device would generate an internal error code representing a determined error which could then be matched to a particular error message and displayed to a user or operator on a display device. Over time, client side processing developed so as to enable a move from a text based interface to a graphical user interface (GUI). This transition shifted some of the processing burden away from the automated device or associated processor toward the client side GUI. These new GUIs vastly improved the ability of users to access information quickly and easily.

Unfortunately, these GUIs were not portable, in part because of their size and machine dependencies and, therefore, were not a viable option for managing and controlling a plurality of network connected devices. Shortly thereafter, the processing burden shifted back towards devices and away from interfaces with the advent of the Internet and Web browsers. As a result, developers sought to use Web browsers as an interface mechanism. However, browsers merely employ a markup language that is useful for displaying text and static images over a network (as was the purpose of browsers when they were conceived), but not for dynamic user interfaces.

### SUMMARY

The following presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

The subject matter relates generally to automation systems, and more particularly to human-machine interface (HMI) visualization utilizing GUI function blocks. Web components are leveraged to provide a dynamic distributed automation control system HMI based on GUI components that were transformed into function block networks. The Web components run within a Web browser and, thus, can be accessed anywhere. This allows for dynamic control and/or monitoring of automation control system devices from remote locations without requiring additional software and/or computing resources to be installed. A user can initiate a Web component from within the Web browser from a computer with an Internet and/or Intranet connection and the like and view the HMI for the automation control device. In one instance, a generic Web component is utilized to create specialized Web components utilizing parameters supplied by hypertext markup language (HTML) pages. The generic Web component allows for extensive re-use of code without necessitating new Web components to be created for every desired HMI, saving time and resources.

To the accomplishment of the foregoing and related ends, certain illustrative aspects of embodiments are described herein in connection with the following description and the annexed drawings. These aspects are indicative, however, of but a few of the various ways in which the principles of the subject matter may be employed, and the subject matter is intended to include all such aspects and their equivalents. Other advantages and novel features of the subject matter may become apparent from the following detailed description when considered in conjunction with the drawings.

### BRIEF DESCRIPTION OF THE DRAWINGS

FIG. 1 is a block diagram of an HMI visualization system in accordance with an aspect of an embodiment.
FIG. 2 is another block diagram of an HMI visualization system in accordance with an aspect of an embodiment.
FIG. 3 is yet another block diagram of an HMI visualization system in accordance with an aspect of an embodiment.
FIG. 4 is a flow diagram of an HMI visualization process in accordance with an aspect of an embodiment.
FIG. 5 is an illustration of an HMI visualization in accordance with an aspect of an embodiment.
FIG. 6 is an illustration of another HMI visualization in accordance with an aspect of an embodiment.
FIG. 7 is a block diagram of an automation system in accordance with an aspect of an embodiment.
FIG. 8 is another block diagram of an automation system in accordance with an aspect of an embodiment.
FIG. 9 is a flow diagram of a method of facilitating HMI visualization in accordance with an aspect of an embodiment.
FIG. 10 is a flow diagram of a method of facilitating HMI visualization with a generic Web component in accordance with an aspect of an embodiment.
FIG. 11 illustrates an example operating environment in which an embodiment can function.
FIG. 12 illustrates another example operating environment in which an embodiment can function.

### DETAILED DESCRIPTION

The subject matter is now described with reference to the drawings, wherein like reference numerals are used to refer to like elements throughout. In the following description, for purposes of explanation, numerous specific details are set forth in order to provide a thorough understanding of the subject matter. It may be evident, however, that subject matter embodiments may be practiced without these specific details. In other instances, well-known structures and devices are shown in block diagram form in order to facilitate describing the embodiments.

As used in this application, the term "component" is intended to refer to a computer-related entity, either hardware, a combination of hardware and software, software, or software in execution. For example, a component may be, but is not limited to being, a process running on a processor, a processor, an object, an executable, a thread of execution, a program, *and*/*or* a computer. By way of illustration, both an application running on a server and the server can be a computer component. One or more components may reside within a process *and*/*or* thread of execution and a component may be localized on one computer *and*/*or* distributed between two or more computers.

Furthermore, the subject matter may be implemented as a method, apparatus, or article of manufacture using standard programming *and*/*or* engineering techniques to produce software, firmware, hardware, or any combination thereof. The term "article of manufacture" (or alternatively, "computer program product") as used herein is intended to encompass a computer program accessible from any computer-readable device, carrier, or media. Of course, those skilled in the art will recognize many modifications may be made to this configuration without departing from the scope or spirit of the subject matter.

Illustrative graphical human-machine interfaces (HMI) are needed to allow easy understanding and operating of distributed automation control systems by human personnel. Due to increasing globalization, remote plant monitoring and configuration is becoming an important issue in automation. By adapting the functionality of the World Wide Web as described herein, a cost-efficient visualization infrastructure can be constructed utilizing proven technology. Thus, by employing Web components such as Web applets, Microsoft's ActiveX® and/or other Web components and the like, HMI's can be visualized by executing program code in a Web browser, without the installation of additional software. Moreover, by utilizing a generic Web component, an easy and software efficient framework for developing HMI Web components is provided for automation control system engineers.

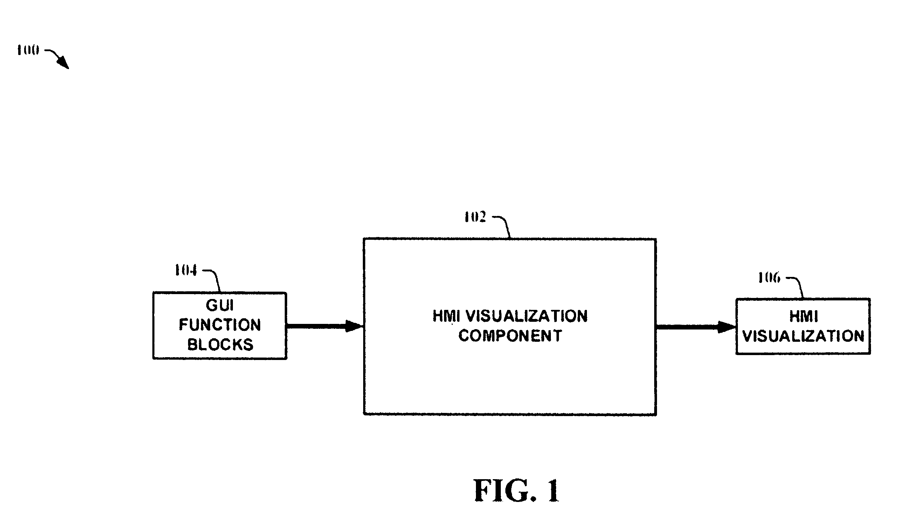

In FIG. 1, a block diagram of an HMI visualization system 100 in accordance with an aspect of an embodiment is shown. The HMI visualization system 100 is comprised of an HMI visualization component 102 that receives GUI function blocks 104 and provides HMI visualization 106. The GUI function blocks 104 are typically comprised of function block networks derived from GUI components. Systems and methods for accomplishing this conversion are described in co-pending U.S. patent application HMI FRAMEWORK FOR EXTENSIBLE AUTOMATION SYSTEM ENGINEERING PLATFORMS and are herein incorporated by reference.

The HMI visualization component 102 utilizes self-contained software and/or control extensions and the like (*e.g.,* Sun Microsystems Java^{™}, Microsoft's ActiveX®, *etc.*) that can operate within a Web browser without requiring additional software. In some instances, the HMI visualization component 102 employs a generic Web component that is specialized using parametric data from an HTML page loaded by the Web browser. Instances can also employ multiple Web components that can communicate between themselves. This allows the HMI visualization component 102 to be employed remotely on any device (e.g., PDA, desktop computer, cell phone, laptop, *etc.),* that can host a Web browser and has some form of access to a communication system. The communication system can be in the form of the Internet, an Intranet, a WAN, and/or a LAN and the like. Although it is preferred that a substantially continuous connection is provided, the HMI visualization component 102 can operate with intermittent connectivity as well. Thus, because the HMI visualization component 102 is self-contained software, relevant manufacturing data can be updated for visualization on a less than continuous basis if circumstances dictate this (e.g., data download at periodic times to reduce bandwidth, *etc.* for noncritical manufacturing processes, *etc.*)*.*

The HMI visualization component 102 employs the GUI function blocks 104 as a basis in constructing the HMI visualization 106. The GUI function blocks 104 can provide, for example, layout and imagery templates for the HMI visualization 106. Additional sensory information can also be provided such as audio and the like. This allows, for example, annunciations and other sounds to be incorporated into the HMI visualization 106. The HMI visualization component 102 can dynamically display data as well. The data is typically sent from remote automation control devices to the HMI visualization component 102 for incorporation into the HMI visualization 106. Thus, the HMI visualization component 102 can provide a fully functioning HMI for an automation control device, allowing control, monitoring, and/or other functions from the HMI.

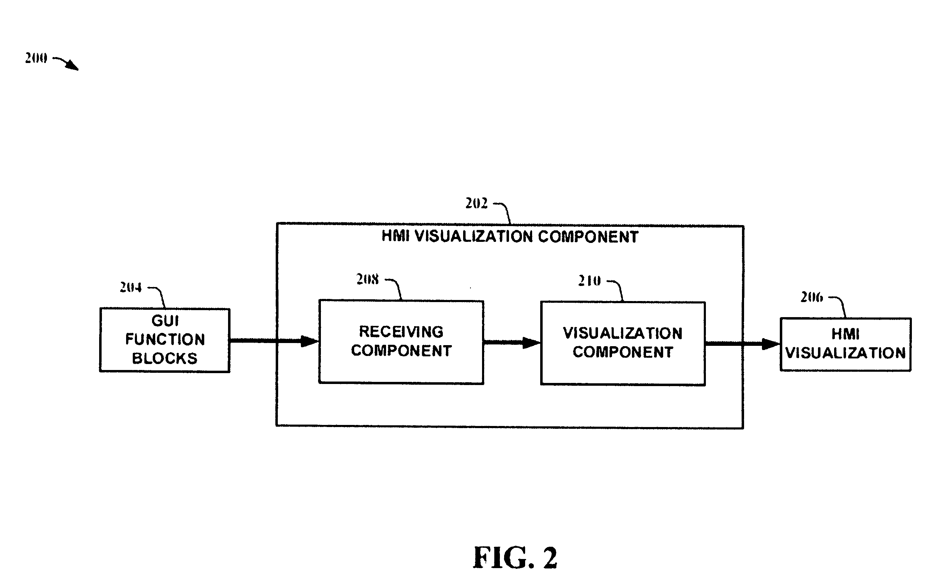

Turning to FIG. 2, another block diagram of an HMI visualization system 200 in accordance with an aspect of an embodiment is depicted. The HMI visualization system 200 is comprised of an HMI visualization component 202. The HMI visualization component 202 is comprised of a receiving component 208 and a visualization component 210. The receiving component 208 receives the GUI function blocks 204 typically upon startup of the HMI visualization component 202. The GUI function blocks 204 provide basic visualization layout information and the like that is then employed by the visualization component 210 to construct the HMI visualization 206. The visualization component 210 is also utilized for incorporating automation control device data into the HMI visualization 206 (discussed *infra).*

The visualization component 210 can employ a specialized Web component and/or a generic Web component to construct the HMI visualization 206. A specialized Web component is an component that is coded for a specific function. Generally speaking, creating specialized Web components for every conceivable HMI would be a daunting task. Therefore, the visualization component 210 can employ a generic Web component that utilizes parametric data from an HTML page and additional data from a Web server to transform it into a specialized Web component. Some HTML Web component parameters can only handle small pieces of information. However, such parameters can be used to point to sources of larger amounts of data, e.g., a file, database, and/or other media on the Web server that is accessible by the component. In this manner, generic component code can be reused, saving time and resources. Specific parameters for a particular HMI can then be encoded into an HTML page which can be easily loaded by the HMI visualization component 202 to allow the visualization component 210 to construct the HMI visualization 206.

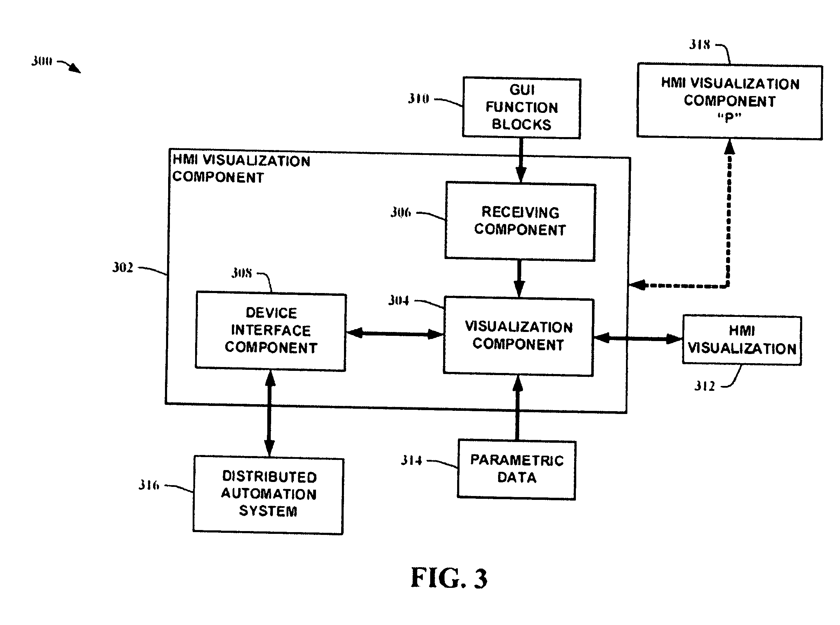

Looking at FIG. 3, yet another block diagram of an HMI visualization system 300 in accordance with an aspect of an embodiment is illustrated. The HMI visualization system 300 is comprised of an HMI visualization component 302. The HMI visualization component 302 is comprised of a visualization component 304, a receiving component 306, and a device interface component 308. Typically, upon startup of the HMI visualization component 302, the receiving component 306 receives the GUI function blocks 310 and provides them to the visualization component 304. The visualization component 304 employs the GUI function blocks 310 to facilitate in constructing the HMI visualization 312.

The visualization component 304 can also employ the parametric data 314 to facilitate in constructing the HMI visualization 312 when a generic Web component is employed. The parametric data 314 is typically provided via an HTML page loaded by a Web browser in which the HMI visualization component 302 is running. The visualization component 304 can employ multiple Web components to construct the HMI visualization 312. It is also possible for the HMI visualization component 302 to communicate with other HMI visualization components located within the same HTML page such as HMI visualization component "P" 318 where "P" represents an integer from one to infinity. In this manner, complex HMI visualizations can be created that can control multiple devices from a single user interface.

The device interface component 308 provides actual device control, monitoring, and/or data collection via distributed automation system 316 that includes the device. Control information initiated via the HMI visualization 312 is passed to the device interface component 308 from the visualization component 304. Similarly, device data retrieved from the distributed automation system 316 by the device interface component 308 is passed to the visualization component 304 which incorporates it into the HMI visualization 312. The link between the device interface component 308 and the distributed automation system 316 can include, but is not limited to, a remote Internet connection, a remote Intranet connection, a direct connection, a LAN connection, and/or a WAN connection and the like. Means for providing the connection can include satellite communications, wired communications, radio communications, cellular communications, and/or other wireless forms of communication such as infrared and the like.

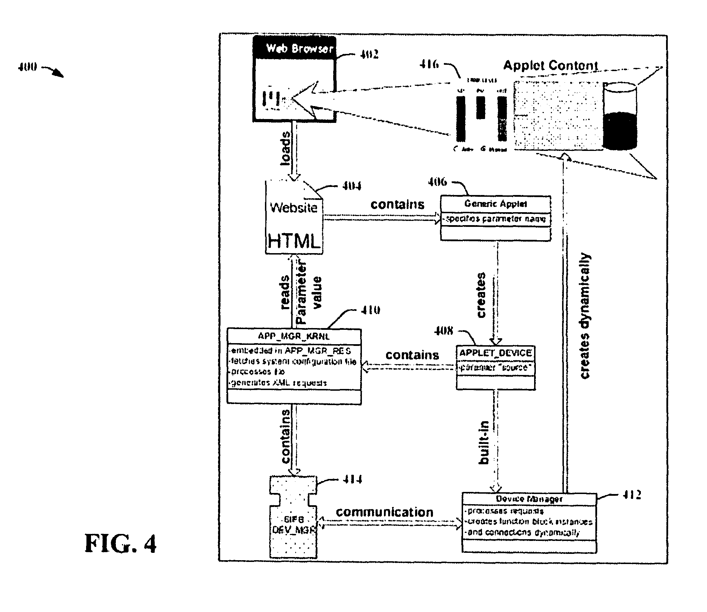

Referring to FIG. 4, a flow diagram of an HMI visualization process 400 in accordance with an aspect of an embodiment is shown. The HMI visualization process 400 utilizes, as an example, a structure based on IEC 61499 (an industrial automation standard) and utilizes a Web component based on a Web applet. First, a Web browser 402 fetches a special HTML document 404 containing a generic applet 406. Next, an applet class is fetched and executed by a runtime environment (e.g., Java^{™}, *etc.*)*.* This generic applet 406 creates an instance of APPLET_DEVICE 408 and initializes its input with a fixed value for the name of the parameter holding the source of the desired IEC 61499 system configuration. APPLET_DEVICE 408 contains an instance of an applet manager kernel function block APP_MGR_KRNL 410, embedded in an applet manager resource APP_MGR_RES. The internal function block network of this composite function block reads the value of an attribute source from the <applet> tag in an HTML file, fetches and parses the IEC 61499 system configuration referenced, creates appropriate XML management requests and transmits them to the built-in device manager 412 of the APPLET_DEVICE 408 via a service interface function block DEV_MGR 414. The built-in device manager 412 finally creates the applet content 416 displayed in the Web browser 402 dynamically out of an IEC 61499 function block network retrieved from the system configuration file.

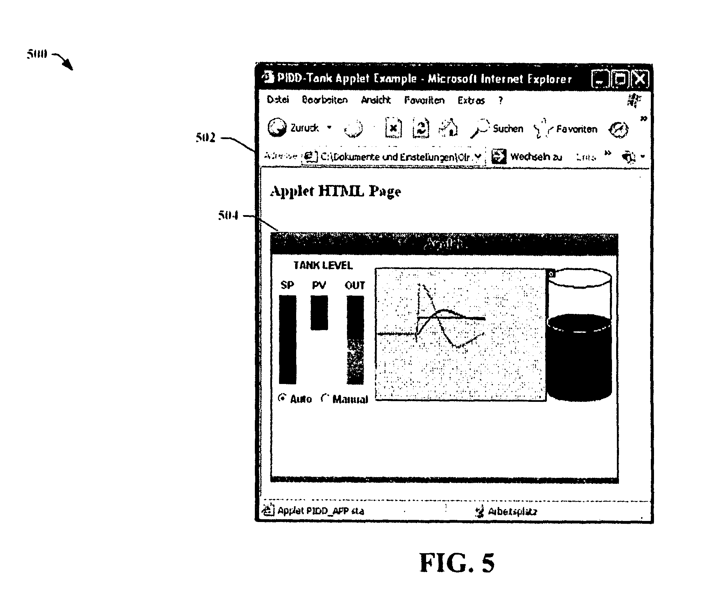

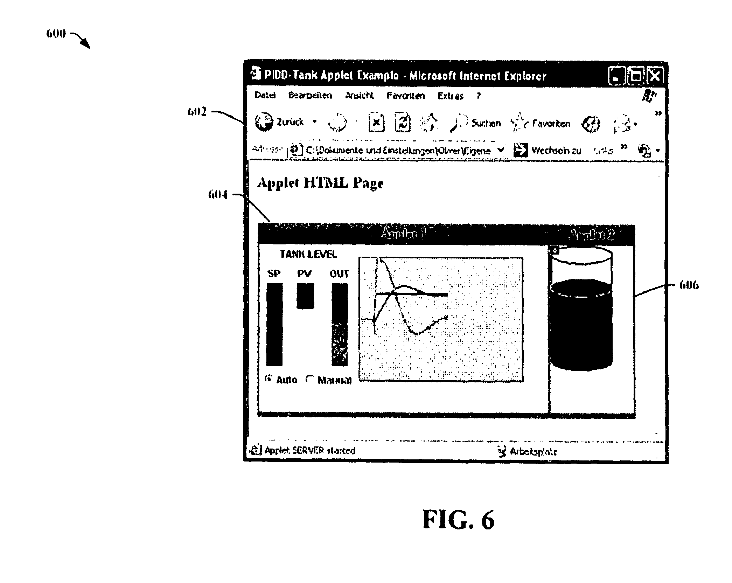

Further illustrations of HMI visualizations utilizing Web components based on Web applets are shown in FIGs. 5 and 6. In FIG. 5, an illustration of an HMI visualization 500 in accordance with an aspect of an embodiment is depicted. The HMI visualization 500 is shown in a Web browser 502 utilizing a Web applet 504. FIG. 6 illustrates another HMI visualization 600 in a Web browser 602. In this example, the HMI visualization 600 is comprised of two Web applets 604, 606. Thus, the HMI visualization 600 can be composed of multiple Web applets.

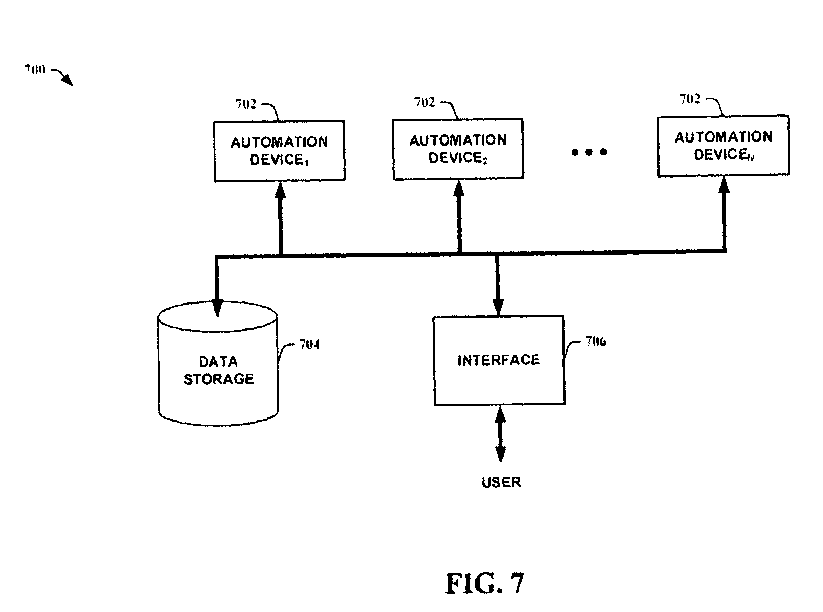

The above systems are utilized to create controls and/or monitoring systems for automation systems. Looking at FIG. 7, a block diagram of an automation system 700 in accordance with an aspect of an embodiment is shown. The automation system 700 is comprised of one or more automation device(s) 702 (AUTOMATION DEVICE₁ through AUTOMATION DEVICE_{N}, where N is an integer from one to infinity), data storage 704 and interface 706. Automation device(s) 702 can include any one of a plurality of industrial, commercial, and/or entertainment processes and machines such as programmable logic controllers (PLCs), pumps providing fluid transport and other processes, fans, conveyor systems, compressors, gear boxes, motion control and detection devices, sensors, screw pumps, and mixers, as well as hydraulic and pneumatic machines driven by motors. Such motors can be combined with other components, such as valves, pumps, furnaces, heaters, chillers, conveyor rollers, fans, compressors, gearboxes, and the like, as well as with appropriate motor drives to form industrial machines and actuators. For example, an electric motor could be combined with a motor drive providing variable electrical power to the motor, as well as with a pump, whereby the motor rotates the pump shaft to create a controllable pumping system.

Data storage 704 provides a storage location for housing data relating to automation device(s) 702 including but not limited to device description, location, and mechanical condition, energy or fuel consumption, completed cycles, horsepower, average RPM, efficiency rating, as well as data from sensors regarding device health *and*/*or* performance. The data storage 704 can be integrated or federated and linked by a communication system. Interface 706 is operable to connect users with a network of automation devices 702 *and*/*or* data storage 704 *via* a wire (e.g., twisted pair, coaxial cable, optical fiber, Ethernet, USB (Universal Serial Bus), FireWire) or wirelessly (e.g., using IEEE 802.11a *and*/*or* IEEE 802.11b standards, Bluetooth technology, satellite). Interface 706 facilitates monitoring, extracting, transmitting, and otherwise interacting with automation device(s) 702 and associated data.

As shown in FIG. 7, a user such as, for example, a device operator can connect to data storage 704 and automation devices 702 over a local area network (LAN) utilizing a variety of LAN technologies, including Fiber Distributed Data Interface (FDDI), Copper Distributed Data Interface (CDDI), Ethernet/IEEE 802.3, Token Ring/IEEE 802.5, physical connection topologies such as bus, tree, ring, and star, and the like. However, communications between networked devices such as automation devices 702, data storage 704, and interface 706 need not be limited to those devices connected locally to a network. Local networked devices can also communicate to and from remote devices.

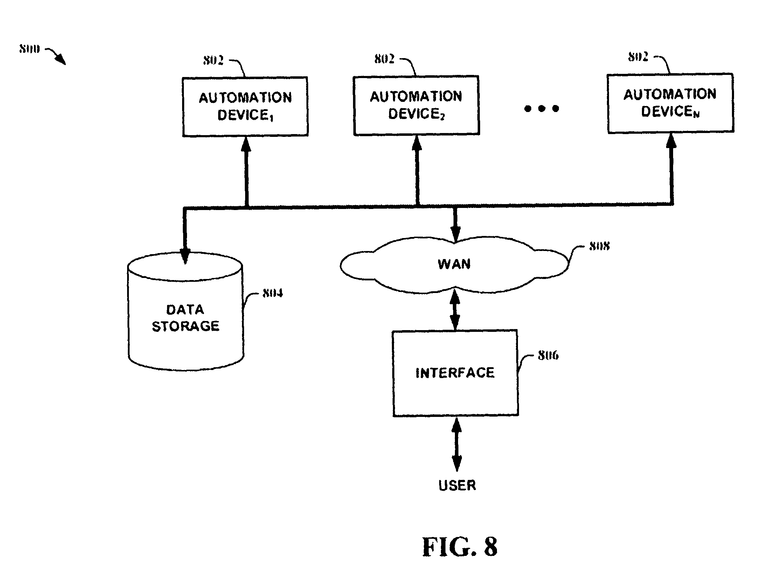

Turning to FIG. 8, another block diagram of an automation system 800 in accordance with an aspect of an embodiment is depicted. FIG. 8 is substantially the same as system 700 except that a user employs interface 806 to interact with automation devices 802 and data storage 804 remotely over a wide area network (WAN) 808. WANs 808 are communication networks that span a large geographic area (e.g., nationwide, worldwide) and generally consist of the several interconnected local area networks (LANs) and metropolitan area networks (MANs). The largest WAN 808 in existence today is the Internet. WAN technologies include, but are not limited to, point-to-point links, circuit switching networks like Integrated Services Digital Networks (ISDN) and variations thereon, packet switching networks, T1 networks, and Digital Subscriber Lines (DSL).

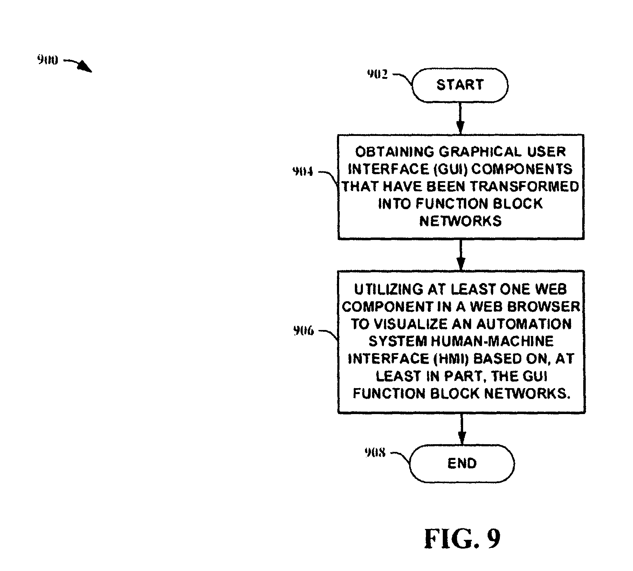

In view of the exemplary systems shown and described above, methodologies that may be implemented in accordance with the embodiments will be better appreciated with reference to the flow charts of FIGs. 9-10. While, for purposes of simplicity of explanation, the methodologies are shown and described as a series of blocks, it is to be understood and appreciated that the embodiments are not limited by the order of the blocks, as some blocks may, in accordance with an embodiment, occur in different orders *and*/*or* concurrently with other blocks from that shown and described herein. Moreover, not all illustrated blocks may be required to implement the methodologies in accordance with the embodiments.

The embodiments may be described in the general context of computer-executable instructions, such as program modules, executed by one or more components. Generally, program modules include routines, programs, objects, data structures, *etc.,* that perform particular tasks or implement particular abstract data types. Typically, the functionality of the program modules may be combined or distributed as desired in various instances of the embodiments.

Additionally, it should be further appreciated that the methodologies disclosed hereinafter and throughout this specification are capable of being stored on an article of manufacture to facilitate transporting and transferring such methodologies to computers. The term article of manufacture, as used, is intended to encompass a computer program accessible from any computer-readable device, carrier, or media.

In FIG. 9, a flow diagram of a method 900 of facilitating HMI visualization in accordance with an aspect of an embodiment is shown. The method 900 starts 902 by obtaining graphical user interface (GUI) components that have been transformed into function block networks 904. Systems and methods for accomplishing this transformation are described in co-pending U.S. patent application HMI FRAMEWORK FOR EXTENSIBLE AUTOMATION SYSTEM ENGINEERING PLATFORMS and are herein incorporated by reference. At least one Web component in a Web browser is then utilized to visualize an automation system human-machine interface (HMI) based on, at least in part, the GUI function block networks 906, ending the flow 908. The Web component can include, but is not limited to, a Web applet, Microsoft's ActiveX® and/or another Web component type and the like. Automation device data can also be incorporated into the HMI to provide dynamic status and/or control information.

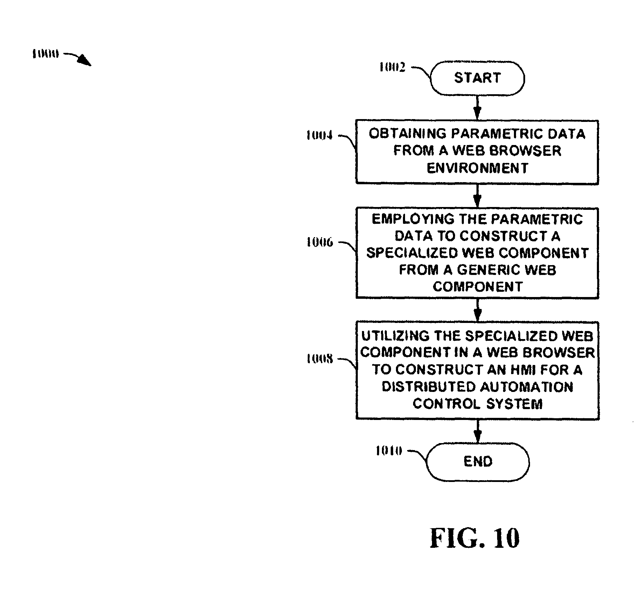

Looking at FIG. 10, a flow diagram of a method 1000 of facilitating HMI visualization with a generic Web component in accordance with an aspect of an embodiment is depicted. The method 1000 starts 1002 by obtaining parametric data from a Web browser environment 1004. Typically, the Web browser loads an HTML page that is encoded with the parametric data specific to a particular desired HMI. The parametric data is then employed to construct a specialized Web component from a generic Web component 1006. The specialized web component is then utilized in a Web browser to construct an HMI for a distributed automation control system 1008, ending the flow 1010. By using the generic Web component, an automation design engineer spends less time on coding components such as, for example, Web applets and/or ActiveX® controls and the like for specific applications and can easily tweak and adjust the parametric data instead to get a desired HMI.

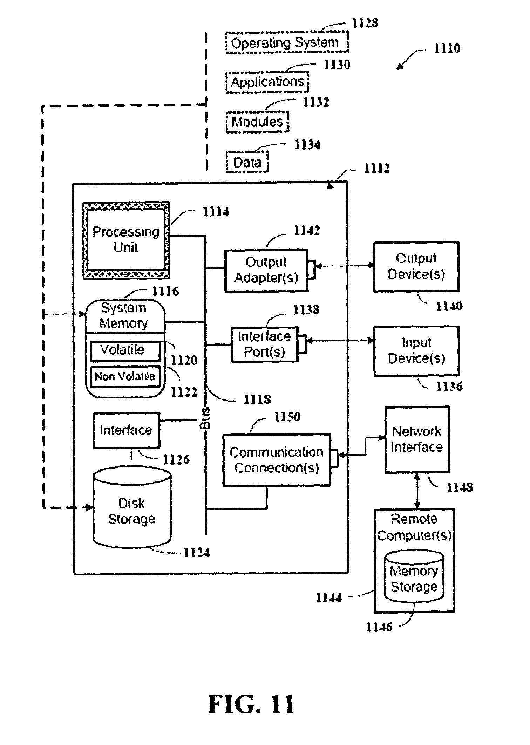

In order to provide additional context for implementing various aspects of the embodiments, FIG. 11 and the following discussion is intended to provide a brief, general description of a suitable computing environment 1100 in which the various aspects of the embodiments can be implemented. While the embodiments have been described above in the general context of computer-executable instructions of a computer program that runs on a local computer *and*/*or* remote computer, those skilled in the art will recognize that the embodiments can also be implemented in combination with other program modules. Generally, program modules include routines, programs, components, data structures, *etc.,* that perform particular tasks *and*/*or* implement particular abstract data types. Moreover, those skilled in the art will appreciate that the inventive methods can be practiced with other computer system configurations, including single-processor or multi-processor computer systems, minicomputers, mainframe computers, as well as personal computers, handheld computing devices, microprocessor-based *and*/*or* programmable consumer electronics, and the like, each of which can operatively communicate with one or more associated devices. The illustrated aspects of the embodiments can also be practiced in distributed computing environments where certain tasks are performed by remote processing devices that are linked through a communications network. However, some, if not all, aspects of the embodiments can be practiced on stand-alone computers. In a distributed computing environment, program modules can be located in local *and*/*or* remote memory storage devices.

With reference to Fig. 11, an exemplary environment 1110 for implementing various aspects of the invention includes a computer 1112. The computer 1112 includes a processing unit 1114, a system memory 1116, and a system bus 1118. The system bus 1118 couples system components including, but not limited to, the system memory 1116 to the processing unit 1114. The processing unit 1114 can be any of various available processors. Dual microprocessors and other multiprocessor architectures also can be employed as the processing unit 1114.

The system bus 1118 can be any of several types of bus structure(s) including the memory bus or memory controller, a peripheral bus or external bus, and/or a local bus using any variety of available bus architectures including, but not limited to, 11-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1116 includes volatile memory 1120 and nonvolatile memory 1122. The basic input/output system (BIOS), containing the basic routines to transfer information between elements within the computer 1112, such as during start-up, is stored in nonvolatile memory 1122. By way of illustration, and not limitation, nonvolatile memory 1122 can include read only memory (ROM), programmable ROM (PROM), electrically programmable ROM (EPROM), electrically erasable ROM (EEPROM), or flash memory. Volatile memory 1120 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1112 also includes removable/non-removable, volatile/non-volatile computer storage media. Fig. 11 illustrates, for example, disk storage 1124. Disk storage 1124 includes, but is not limited to, devices like a magnetic disk drive, floppy disk drive, tape drive, Jaz drive, Zip drive, LS-100 drive, flash memory card, or memory stick. In addition, disk storage 1124 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1124 to the system bus 1118, a removable or non-removable interface is typically used such as interface 1126.

It is to be appreciated that Fig 11 describes software that acts as an intermediary between users and the basic computer resources described in suitable operating environment 1110. Such software includes an operating system 1128. Operating system 1128, which can be stored on disk storage 1124, acts to control and allocate resources of the computer system 1112. System applications 1130 take advantage of the management of resources by operating system 1128 through program modules 1132 and program data 1134 stored either in system memory 1116 or on disk storage 1124. It is to be appreciated that the present invention can be implemented with various operating systems or combinations of operating systems.

A user enters commands or information into the computer 1112 through input device(s) 1136. Input devices 1136 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1114 through the system bus 1118 *via* interface port(s) 1138. Interface port(s) 1138 include, for example, a serial port, a parallel port, a game port, and a universal serial bus (USB). Output device(s) 1140 use some of the same type of ports as input device(s) 1136. Thus, for example, a USB port may be used to provide input to computer 1112 and to output information from computer 1112 to an output device 1140. Output adapter 1142 is provided to illustrate that there are some output devices 1140 like monitors, speakers, and printers, among other output devices 1140 that require special adapters. The output adapters 1142 include, by way of illustration and not limitation, video and sound cards that provide a means of connection between the output device 1140 and the system bus 1118. It should be noted that other devices and/or systems of devices provide both input and output capabilities such as remote computer(s) 1144.

Computer 1112 can operate in a networked environment using logical connections to one or more remote computers, such as remote computer(s) 1144. The remote computer(s) 1144 can be a personal computer, a server, a router, a network PC, a workstation, a microprocessor based appliance, a peer device or other common network node and the like, and typically includes many or all of the elements described relative to computer 1112. For purposes of brevity, only a memory storage device 1146 is illustrated with remote computer(s) 1144. Remote computer(s) 1144 is logically connected to computer 1112 through a network interface 1148 and then physically connected *via* communication connection 1150. Network interface 1148 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1150 refers to the hardware/software employed to connect the network interface 1148 to the bus 1118. While communication connection 1150 is shown for illustrative clarity inside computer 1112, it can also be external to computer 1112. The hardware/software necessary for connection to the network interface 1148 includes, for exemplary purposes only, internal and external technologies such as, modems including regular telephone grade modems, cable modems and DSL modems, ISDN adapters, and Ethernet cards.

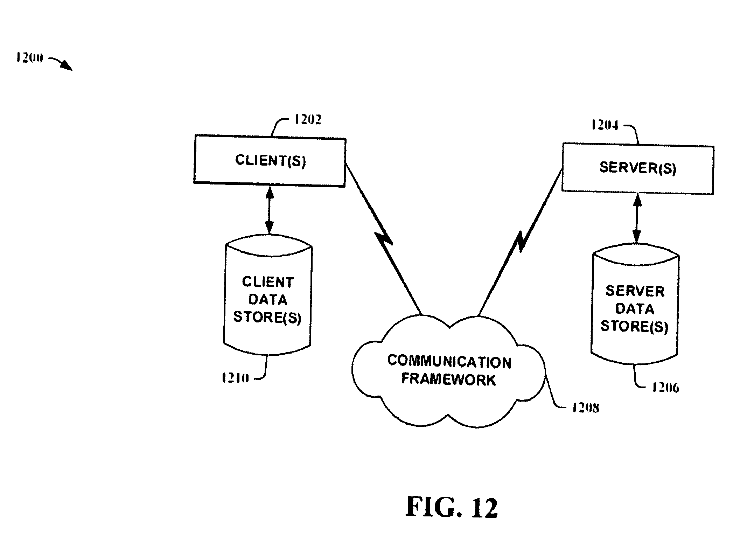

FIG. 12 is another block diagram of a sample computing environment 1200 with which embodiments can interact. The system 1200 further illustrates a system that includes one or more client(s) 1202. The client(s) 1202 can be hardware *and*/*or* software (e.g., threads, processes, computing devices). The system 1200 also includes one or more server(s) 1204. The server(s) 1204 can also be hardware *and*/*or* software (e.g., threads, processes, computing devices). One possible communication between a client 1202 and a server 1204 can be in the form of a data packet adapted to be transmitted between two or more computer processes. The system 1200 includes a communication framework 1208 that can be employed to facilitate communications between the client(s) 1202 and the server(s) 1204. The client(s) 1202 are connected to one or more client data store(s) 1210 that can be employed to store information local to the client(s) 1202. Similarly, the server(s) 1204 are connected to one or more server data store(s) 1206 that can be employed to store information local to the server(s) 1204.

In one instance of an embodiment, a data packet transmitted between two or more computer components that facilitates control of automation systems is comprised of, at least in part, information relating to a human-machine interface (HMI) that is visualized by, at least in part, a Web component that utilizes graphical user interface (GUI) function blocks for automation systems.

It is to be appreciated that the systems *and*/*or* methods of the embodiments can be utilized in automation HMI visualization facilitating computer components and non-computer related components alike. Further, those skilled in the art will recognize that the systems *and*/*or* methods of the embodiments are employable in a vast array of electronic related technologies, including, but not limited to, computers, servers *and*/*or* handheld electronic devices, and the like.

What has been described above includes examples of the embodiments. It is, of course, not possible to describe every conceivable combination of components or methodologies for purposes of describing the embodiments, but one of ordinary skill in the art may recognize that many further combinations and permutations of the embodiments are possible. Accordingly, the subject matter is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.
In summary the invention discloses Web components leveraged to provide a dynamic distributed automation control system HMI based on GUI function block networks. The Web components run within a Web browser, allowing for dynamic control and/or monitoring of automation control system devices from remote locations - without requiring additional software and/or computing resources to be installed. In one instance, a generic Web component is utilized to create specialized Web components utilizing parameters supplied by hypertext markup language (HTML) pages.

## Claims

1. A system that visualizes distributed control systems for automation, comprising:
a receiving component (208) that receives graphical user interface (GUI) components in the form of function block networks; and
a visualization component (210) that visualizes, *via* at least one Web component in a Web browser, an automation system human-machine interface (HMI) based on, at least in part, the received GUI function block networks.

2. The system of claim 1 further comprising:
a device interface component (308) that interfaces, directly *and*/*or* indirectly, with an automation device (316) and the visualization component (304) to allow control *and*/*or* monitoring of the device *via* the HMI.

3. The system of claim 2, wherein the visualization component (304) obtains data from the automation device (316) *via* the device interface component (308) and visualizes the data on the HMI.

4. The system of claim 2 or 3, wherein the device interface component (308) employs, at least in part, function blocks (310) to provide control, monitoring, *and*/*or* communication with a device in a distributed automation system (316).

5. The system of one of claims 1 to 4, wherein the visualization component (304) employs a generic Web component (406) to visualize the HMI.

6. The system of claim 5, wherein the visualization component (304) employs parametric data (314) to provide a specialized Web component from the generic Web component.

7. The system of claim 6, wherein the visualization component (304) obtains the parametric data from a hypertext markup language (HTML) page.

8. The system of claim 6 or 7, wherein the visualization component (304) utilizes the parametric data (314) *and*/*or* additional data from a Web server to construct function block networks to facilitate in visualizing the HMI.

9. The system of claim 8, wherein the parametric data (314) provides a pointer to data on the Web server accessible by the Web component.

10. The system of one of claims 1 to 9, wherein the visualization component (304) allows communication between the Web component and other Web components to facilitate in visualizing the HMI.

11. The system of one of claims 1 to 10 is located in a remote location relative to an automation device (702) related to the HMI.

12. The system of one of claims 1 to 11 is compatible with International Electrotechnical Commission (IEC) standard 61499.

13. A method for visualizing distributed control systems for automation, comprising:
obtaining graphical user interface (GUI) components that have been transformed into function block networks (904); and
utilizing at least one Web component in a Web browser to visualize an automation system human-machine interface (HMI) based on, at least in part, the GUI function block networks (906).

14. The method of claim 13 further comprising:
constructing the Web component based on a generic Web component and parametric data (304).

15. The method of claim 14 further comprising:
obtaining the parametric data from the Web browser hypertext markup language (HTML) page *via* function blocks (1004).

16. The method of claim 14 or 15 further comprising:
building function block networks based on the parametric data *and*/*or* additional data from a Web server to facilitate in visualizing the HMI (1006).

17. The method of claim 16, wherein the parametric data provides a pointer to data on the Web server accessible by the Web component.

18. The method of one of claims 13 to 17 further comprising:
obtaining data from a distributed automation control device *via* a device interface that employs function blocks; and
visualizing the data on the HMI *via* the Web component to allow user monitoring *and*/*or* control of the distributed automation control device (1008).

19. The method of claim 18 further comprising:
interacting with other Web components within the Web browser to facilitate in visualizing the HMI (1006).

20. The method of one of claims 13 to 19 is performed remotely to a location of a distributed automation control device (1008).

21. The method of one of claims 13 to 20 conforms to International Electrotechnical Commission (IEC) standard 61499.

22. A system that visualizes distributed control systems for automation, comprising:
means for obtaining function blocks representative of graphical user interface (GUI) components (306); and
means for employing a Web component to construct a human-machine interface (HMI) based on, at least in part, the GUI function blocks to allow user interaction with at least one distributed automation control system device (304).

23. A data packet, transmitted between two or more computer components, that facilitates control of automation systems, the data packet comprising, at least in part, information relating to a human-machine interface (HMI) that is visualized by, at least in part, a Web component that utilizes graphical user interface (GUI) function blocks for automation systems (304).
